# EUROPEAN PATENT APPLICATION

(11) **EP 2 159 093 A1**
(43) Date of publication of application: **03.03.2010**
(21) Application number: 09010948.9
(22) Date of filing: 26.08.2009
(51) Int. Cl.: B60K 11/04, B62M 7/02, B62J 25/00

(54) **Motorcycle**

(30) Priority: 29.08.2008 JP 2008222394; 07.07.2009 JP 2009161098
(71) Applicant: Yamaha Hatsudoki Kabushiki Kaisha, Iwata-shi, Shizuoka 438-8501 (JP)
(72) Inventor: Saito, Yusuke, Iwata-shi Shizuoka-ken 438-8501 (JP); Shimizu, Masafumi, Iwata-shi Shizuoka-ken 438-8501 (JP); Ikeda, Kota, Iwata-shi Shizuoka-ken 438-8501 (JP); Yamada, Muneyuki, Iwata-shi Shizuoka-ken 438-8501 (JP)
(74) Representative: Schoppe, Fritz

(57) **Abstract**

A motorcycle including a comfortable footrest for a tandem rider while keeping the sporty appearance is provided. A side cover 7A has a bottom edge 7b extending obliquely rearward and upward and spaced-apart in the upward direction from a rear wheel 11 as seen in a side view, and covers an outer portion of a part of a seat frame 26. A radiator is located outside of the engine unit in a width-direction of the motorcycle, and is located below the bottom edge 7b of the side cover 7A. A tandem footrest 27 includes a footrest section 35 located below the bottom edge 7b of the side cover 7A as seen in the side view. A radiator cover 9 includes a side surface portion for covering an outer portion of the radiator in a width-direction of the motorcycle, and a top surface portion for covering a top portion of the radiator while having a gap in the up/down direction from at least the radiator.

## Description

### FIELD OF THE INVENTION

The present invention relates to a motorcycle.

### BACKGROUND OF THE INVENTION

In the field of motorcycles including a unit swing-type engine unit, motorcycles of a sporty design are conventionally known (see patent document 1 mentioned below). The engine mounted on the motorcycle described in patent document 1 is of an air-cooled type. In a motorcycle disclosed in patent document 1, at least a part of a bottom edge portion of a side cover which covers a bottom portion of a seat is formed to be inclined upward and rearward obliquely in the vehicle. In addition, as seen in a side view of the vehicle, a rear wheel is exposed. Owing to these, the motorcycle has a sporty appearance. A footrest for a tandem rider (hereinafter, referred to as the "tandem footrest") is provided at a position which is relatively close to a front end of the side cover and is outside the side cover in a width-direction of the motorcycle.

Patent document 2 discloses a motorcycle having a water-cooled type engine may be mounted. In such a case, it is conceivable to adopt a system in which the radiator is provided outside the engine in a width-direction of the motorcycle, namely, the so-called side radiator system (one example is described in patent document 2 mentioned below).

### PRIOR ART DOCUMENTS

### PATENT DOCUMENTS

Patent document 1: Japanese Laid-Open Patent Publication No. 2005-343363
Patent document 2: Japanese Laid-Open Patent Publication No. 2008-101600

### SUMMARY OF THE INVENTION

The present invention made in light of this point has an object of providing a motorcycle having a side-radiator system, the motorcycle including a footrest comfortable for the tandem rider while keeping the sporty appearance.

Amotorcycle according to the present invention includes a body frame; a seat supported by the body frame; an engine unit including an engine, the engine unit being located below the seat and swingably supported by the body frame; a rear wheel located rearward to the engine; a body cover having a bottom edge which extends rearward and upward obliquely as seen in a side view and is distanced upward from the rear wheel as seen in the side view, the body cover being located below the seat so as to cover an outer portion of a part of the body frame; a radiator located outside of the engine unit in a width-direction of the motorcycle and having at least a part thereof located below the bottom edge of the body cover; a tandem footrest including a leg section fixed to the body frame and a footrest section supported by the leg section and located outside of the radiator in a width-direction of the motorcycle and below the bottom edge of the body cover as seen in the side view, the footrest section supporting a leg of a tandem rider; and a radiator cover including a side surface portion for covering an outer portion of the radiator between the radiator and the footrest section in a width-direction of the motorcycle, and a top surface portion for covering a top portion of the radiator while having a gap in an up/down direction from at least the radiator.

The present invention provides a motorcycle including a footrest comfortable for a tandem rider while keeping the sporty appearance.

### BRIEF DESCRIPTION OF THE DRAWINGS

FIG. 1 is a side view of a motorcycle in embodiment 1;
FIG. 2 is a side view of a radiator cover and the vicinity thereof in embodiment 1;
FIG. 3 is a cross-sectional view of a radiator and the vicinity thereof in embodiment 1, in which a tandem footrest is shown with the two-dot chain line to represent the positional relationship in the left/right direction between the tandem footrest and the radiator cover;
FIG. 4 is a rear view of the radiator and the vicinity thereof in embodiment 1, in which a portion of a seat frame which is connected to the tandem footrest is shown by a cross-section;
FIG. 5 is a plan view of a flap in embodiment 2, in which the rear wheel and a part of the flap are shown by a cross-section;
FIG. 6 is a side view of the radiator cover and the vicinity thereof in embodiment 3;
FIG. 7 is a rear view of the radiator and the vicinity thereof in embodiment 3, in which a portion of the seat frame which is connected to the tandem footrest and a rear arm are shown by a cross-section;
FIG. 8 is a side view of a rear portion of the motorcycle in embodiment 4;
FIG. 9 is a side view of the radiator cover and the vicinity thereof in embodiment 4;
FIG. 10 shows the tandem footrest in embodiment 4; FIG. 10A is a perspective view as seen from the inside in a width-direction of the motorcycle, and FIG. 10B is a perspective view as seen from the outside in a width-direction of the motorcycle; and
FIG. 11 provides rear views of the radiator and the vicinity thereof in embodiment 4; FIG. 11A shows a state where the rear arm is provided, and FIG. 11B shows a state where the rear arm is not provided.

### DETAILED DESCRIPTION OF THE PREFERRED EMBODIMENTS

### <Embodiment 1>

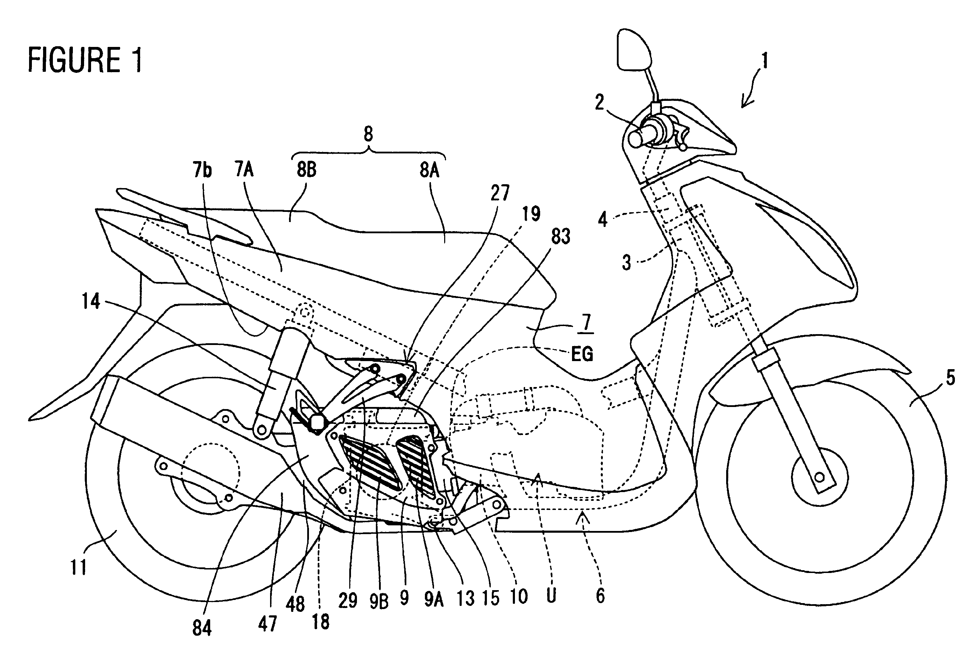

Embodiment 1 of the present invention will be described with reference to FIG. 1 through FIG. 4. In the following description, the directions of "front", "rear", "up", "down", "left", "right" and the like refer to the respective directions as seen from a rider sitting on a seat 8, unless otherwise specified. Therefore, the expression "in a width-direction of the motorcycle" refers to a direction extending in a width direction, i.e., in a left/right direction, of the motorcycle 1.

FIG. 1 shows a motorcycle 1 according to this embodiment. In a front portion of the motorcycle 1, a handle 2 is provided. The handle 2 is coupled to a front wheel 5 via a steering shaft 4. The steering shaft 4 is inserted into a head pipe 3. To the head pipe 3, a body frame 6, which acts as the framework of the entire vehicle body, is coupled. The body frame 6 I s covered with a body cover 7. The body frame 6 supports the seat 8. A front portion of the seat 8 is a driver's seat 8A on which a driver is to sit, and a rear portion of the seat 8 is a tandem seat 8B on which a tandem rider is to sit. The tandem seat 8B is one step higher than the driver's seat 8A. Portions of the body cover 7 which cover side portions of the vehicle are each formed of a side cover 7A. A bottom edge7b of the side cover 7A extends rearward and upward obliquely.

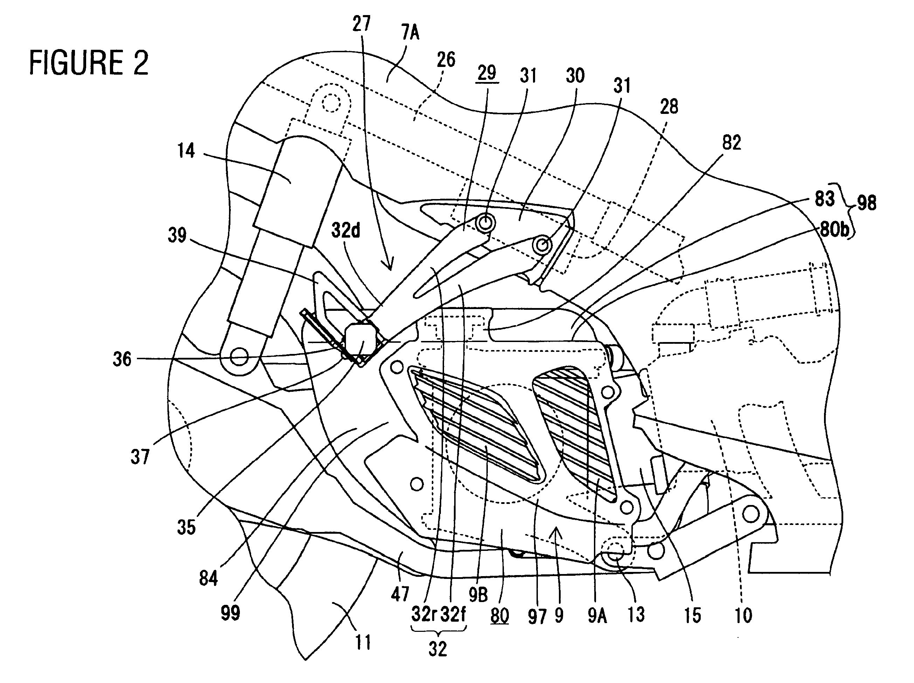

The body frame 6 is located below the seat 8 as seen in the side view, and extends rearward and upward obliquely. The body frame 6 includes a seat frame 26 for supporting the seat 8 (see FIG. 2). The bottom edge 7b of the side cover 7A is located below the seat frame 26, and extends rearward and upward obliquely. Thus, in the motorcycle 1 according to this embodiment, as seen in the side view of the vehicle, a radiator cover 9 and the rear wheel 11 are entirely exposed.

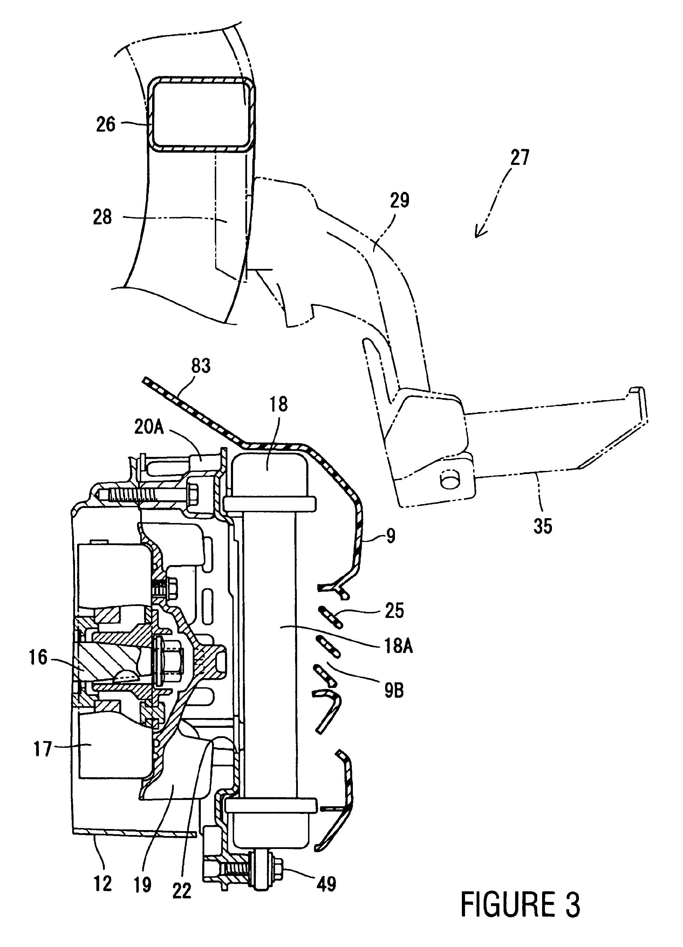

An engine unit U is attached to the body frame 6. The engine unit U includes an engine EG having a cylinder head 10, a cylinder block 15 and a crank case 12 (see FIG. 3), and also includes an automatic transmission not shown. The engine unit U is supported by the body frame 6 to be pivotable around a pivot shaft 13. Rearward to the engine unit U, the rear wheel 11 is coupled. To the right (the side closer to the viewer of FIG. 1) of the engine unit U, a rear arm 48 is provided. Rearward to the engine unit U, bottom ends of rear shock absorbers 14 are pivotably coupled. A pair of left and right rear shock absorbers 14 are provided in the motorcycle 1. The bottom end of one of the rear shock absorbers 14 (right rear shock absorber 14) is pivotably coupled to the rear arm 48. Top ends of the left and right rear shock absorbers 14 are pivotably coupled to the body frame 6. Owing to such a structure, the engine unit U is of a unit swing-type swingable together with the rear wheel 11 around the pivot shaft 13.

The engine EG according to this embodiment is a water-cooled type, four-cycle single-cylinder engine, and is located in the state where a cylinder shaft is directed substantially horizontally. In the engine EG according to this embodiment, the crank case 12, the cylinder block 15, and the cylinder head 10 are coupled in this order from rear to front (see FIG. 1, 2 or 3). Inside the crank case 12, a crank shaft 16 is accommodated (see FIG. 3). The crank shaft 16 is supported by the crank case 12, and is rotatable around an axis thereof. The crank shaft 16 extends in the left/right direction inside the crank case 12.

To the cylinder head 10 of the engine EG, one end of an exhaust pipe 47 is connected. The exhaust pipe 47 passes below a radiator 18 and a fan case 20 descried later, and extends rearward in the vehicle.

To the left of the crank shaft 16, the automatic transmission (not shown) for driving the rear wheel 11 is located. The automatic transmission is, for example, a belt-type continuously variable transmission having a V belt. To the right of the crank shaft 16, a flywheel magnet 17 and a radiator fan 19 for power generation are located along an axial direction of the crank shaft 16. To the right of the radiator fan 19, the radiator 18 is located. The radiator fan 19 guides air from the right to the left of the radiator 18. An outer side surface of the radiator 18 is entirely covered with the radiator cover 9.

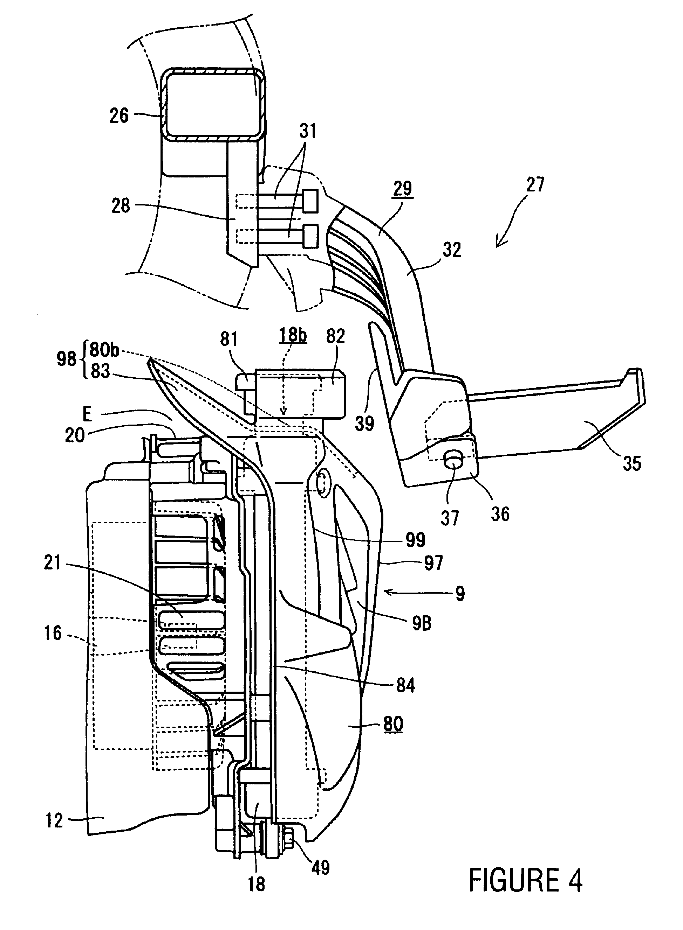

The radiator fan 19 is attached to a right end portion of the crank shaft 16. Therefore, the radiator fan 19 rotates in association with the crank shaft 16. As the radiator fan 19 according to this embodiment, a centrifugal fan is used, but there is no specific limitation on the type of the radiator fan 19. By the rotation of the radiator fan 19, the air outside the radiator cover 9 passes the radiator 18 to the radiator fan 19 and then turns to a centrifugal direction of the radiator fan 19. The air which has turned to the centrifugal direction of the radiator fan 19 is released outside the fan case 20 as exhaust air from a plurality of exhaust air openings 21 of the fan case 20 (see FIG. 4).

The fan case 20 is formed of, for example, aluminum die-cast, and accommodates the radiator fan 19 inside. Into the fan case 20 and a right surface of the crank case 12, a bolt not shown is screwed, so that the fan case 20 is supported by the crank case 12. As shown in FIG. 3, a right surface of the fan case 20 has a ventilation opening 22 for guiding air from the radiator 18 to the radiator fan 19. A diameter of the ventilation opening 22 is substantially the same as an outer diameter of the radiator fan 19. The center of the ventilation opening 22 and the rotation center of the radiator fan 19 are set at substantially the same position as seen in the side view of the vehicle. The fan case 20 includes a cylindrical section 20A extending in the axial direction of the crank shaft 16. The cylindrical section 20A is located at a position overlapping the radiator fan 19 in the front/rear direction. The cylindrical section 20A is formed to be cylindrical. An inner diameter of the cylindrical section 20A is larger than the diameter of the ventilation opening 22. In an outer circumferential surface of the cylindrical section 20A, the plurality of exhaust air openings 21 are formed. The exhaust air openings 21 each have a rectangular shape which is longer in the direction in which the cylindrical section 20A extends than in the circumferential direction of the cylindrical section 20A. Owing to these plurality of exhaust air openings 21 formed in the outer circumferential surface of the cylindrical section 20A, an area in the vicinity of the fan case 20 acts as an area E to which the exhaust air which has passed the radiator 18 is guided. The motorcycle 1 according to this embodiment has a structure in which the bottom edge 7b of the side cover 7A is inclined rearward and upward obliquely as seen in the side view and the radiator cover 9 and the rear wheel 11 are entirely exposed as seen in the side view of the vehicle (see FIG. 1). Owing to such a structure, a space in the area E which is above and rearward to the fan case 20 is open to the sides of the vehicle. Therefore, especially in the space above and rearward to the fan case 20, the exhaust air which has passed the radiator 18 easily flows out directly outside the vehicle without being blocked by the body cover 7.

The radiator 18 is attached to the right surface of the fan case 20 by a plurality of bolts 49 connecting the radiator 18 and the fan case 20 (FIG. 3 and FIG. 4 each show only one bolt 49 provided in a bottom end portion of the fan case 20).

The radiator cover 9 is integrally formed of a synthetic resin. The radiator cover 9 is fixed to the right surface of the fan case 20 by a bolt. As shown in FIG. 1, the radiator cover 9 has front and rear cooling air intake openings 9A and 9B. In each of the intake openings 9A and 9B, a plurality of air guide plates 25 (FIG. 3) extending in the front/rear direction are located. Each of the intake openings 9A and 9B can take in the wind, blowing against the vehicle while the motorcycle 1 is running, to the left of the radiator cover 9. The wind taken inside through the radiator cover 9 passes a core portion (see FIG. 3) of the radiator 18.

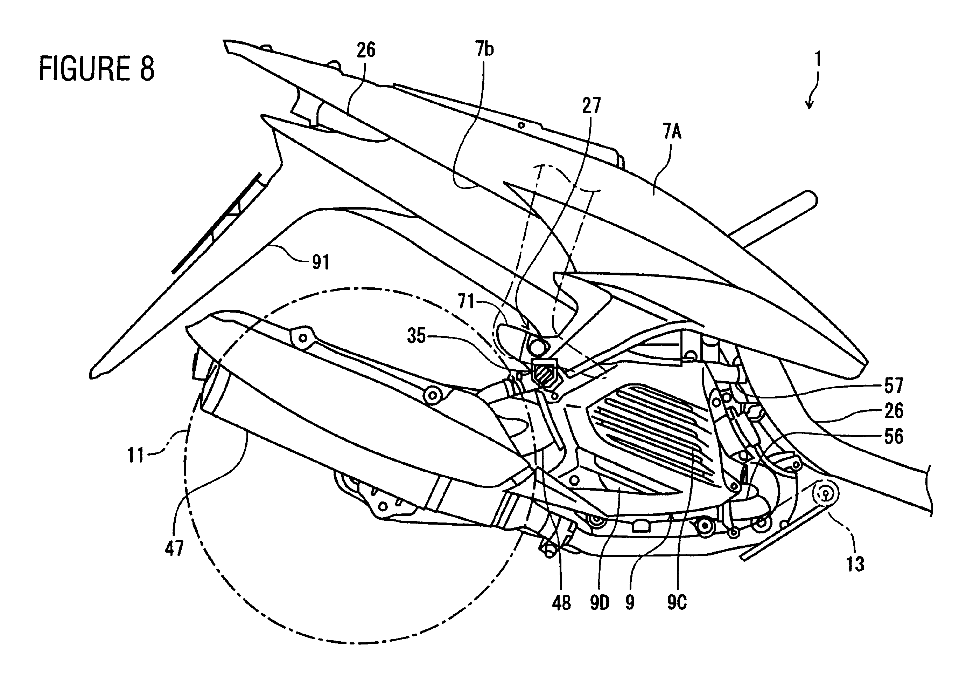

As shown in FIG. 4, a bracket 28 is provided, above the fan case 20, on the seat frame 26 which is a part of the body frame 6. The bracket 28 extends downward from the seat frame 26. To the bracket 28, a tandem footrest 27 is fixed. The tandem footrest 27 includes a metal main body 29. In this embodiment, the main body 29 of the tandem footrest 27 is formed of aluminum. As shown in FIG. 2 or FIG. 4, the main body 29 includes a support section 30, a footrest section 35, holding sections 36, a leg section 32, and a base section 39. The support section 30 is attached to the seat frame 26 via the bracket 28. The footrest section 35 supports the leg of the tandem rider from below. The holding sections 36 hold the footrest section 35 such that the footrest section 35 is foldable. The leg section 32 is located between the holding sections 36 and the support section 30, and connects the holding sections 36 and the support section 30 to each other. The base section 39 is connected to the holding sections 36. When the leg of the tandem rider is on the footrest section 35, the heel of the tandem rider contacts the base section 39 (see, for example, FIG. 8).

As shown in FIG. 2, the support section 30 is formed above the main body 29. The leg section 32 is screwed to the bracket 28 via the support section 30. As seen in the side view, the support section 30 is formed to have a generally triangular shape, in which the size in the up/down direction thereof is gradually decreased from a front portion toward a rear portion. The support section 30 is tightened to the bracket 28 by a plurality of bolts 31. In this embodiment, the support section 30 is tightened and fixed to the bracket 28 by the bolts at two positions, i.e., one front position and one rear position. From the support section 30, the leg section 32 extends rearward and downward. The leg section 32 includes a front leg section 32f and a rear leg section 32r which are branched from each other, and the front leg section 32f and the rear leg section 32r extend rearward and downward from the support section 30. The front leg section 32f and the rear leg section 32r become gradually closer to each other as approaching a rear end of the leg section 32, and are connected to a bottom leg section 32d.

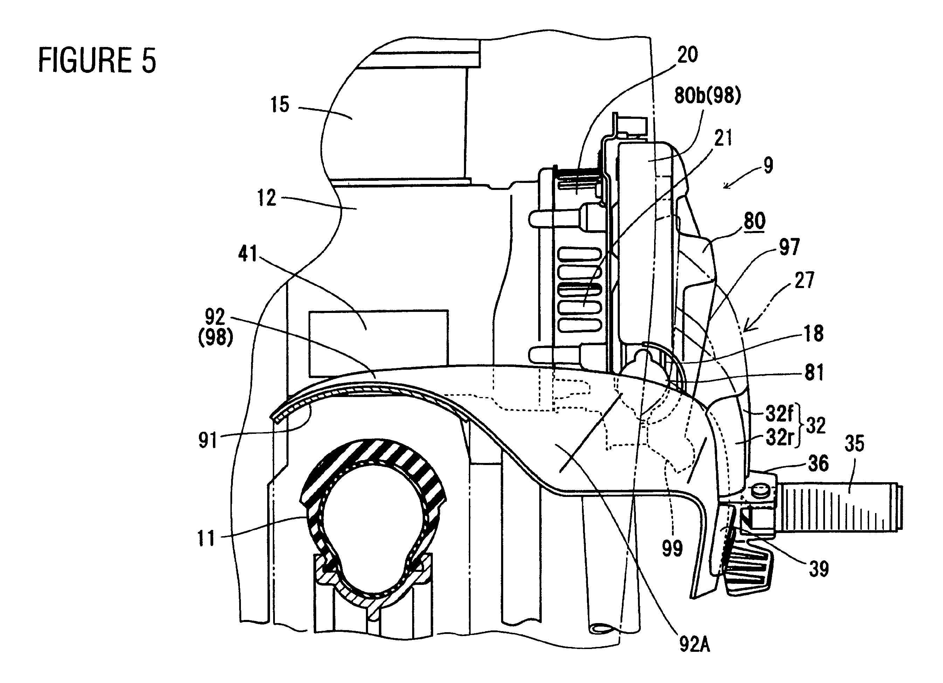

As shown in FIG. 4, the holding sections 36 are connected to a bottom end portion of the leg section 32. The holding sections 36 project outward in a width-direction of the motorcycle from the bottom end portion of the leg section 32. The holding sections 36 are a pair of top and bottom holding sections 36 (see, for example, FIG 5). The top and bottom holding sections 36 are distanced from each other in the up/down direction while holding one end of the footrest section 35 there between. The top and bottom holding sections 36 have a hinge pin 37 inserted there through. The footrest section 35 is pivotably attached to the holding sections 36 by the hinge pin 37. The footrest section 35 is rod-shaped, and is pivotable between a use position at which the footrest section 35 projects outward in a width-direction of the motorcycle and a storage position at which the footrest section 35 is located along the base section 39.

As shown in FIG. 4, the footrest section 35 at the use position is outside of the radiator 18 in a width-direction of the motorcycle. As shown in FIG. 1, the footrest section 35 is located rearward to the radiator 18. Namely, in the motorcycle 1 according to this embodiment, the footrest section 35 is located outside of the radiator in a width-direction of the motorcycle, and rear, to the radiator 18. Alternatively, the footrest section 35 may be located outside of the radiator 18 in a width-direction of the motorcycle. Still alternatively, the footrest section 35 may be located outside of the radiator 18 in a width-direction of the motorcycle and overlap the radiator 18 as seen in the side view. Still alternatively, the footrest section 35 may be located above the radiator 18 as seen in the side view.

As shown in FIG. 2, the base section 39 extends rearward and upward from the bottom end portion of the leg section 32. The base section 39 is integrally formed with the leg section 32.

As shown in FIG. 2, the radiator cover 9 includes a substrate 80. The substrate 80 covers the outer surface of the radiator 18 in a width-direction of the motorcycle. The intake openings 9A and 9B are both formed in the substrate 80 (see FIG. 1). The substrate 80 is curvedtoproject outward in a width-direction of the motorcycle. As described later, the substrate 80 in this embodiment includes a side surface portion 97, a top surface portion 98, and a rear surface portion 99. The side surface portion 97 is a portion of the substrate 80 which is outside of the radiator 18 in a width-direction of the motorcycle. The top surface portion 98 is a top portion of the substrate 80, and the rear surface portion 99 is a rear portion of the substrate 80.

As shown in FIG. 4, a cap protection section 82 for covering an outer surface of a radiator cap 81 is formed above and rearward to the substrate 80. The radiator cap 81 closes a water intake opening 18b of the radiator 18. The cap protection section 82 is integrally formed with the substrate 80, and projects upward from the substrate 80. The cap protection section 82 in this embodiment covers substantially half of the outer surface of the radiator cap 81. The cap protection section 82 may be formed so as to cover a top portion of the radiator cap 81. In this case, the cap protection section 82 acts as a part of the top surface portion 98 of the radiator cover 9 described later.

As shown in FIG. 2, the radiator cover 9 includes a first deflection section 83 extending upward from a top edge of the substrate 80 and a second deflection section 84 extending rearward from a rear edge of the substrate 80. The first deflection section 83 changes the direction in which the exhaust air from the fan case 20 flows. The first deflection section 83 is connected to the top edge of the substrate 80, and divided into a front portion and a rear portion with respect to the cap protection section 82. As shown in FIG. 4, the first deflection section 83 extends inward in a width-direction of the motorcycle and upward obliquely from a inner end of the top edge of the substrate 80 in a width-direction of the motorcycle. As seen in the side view, the position of the first deflection section 83 in the up/down direction is substantially the same as the position of the cap protection section 82 along the entire length of the first deflection section 83 in the front/rear direction (see FIG. 2, etc.). As shown in FIG. 4, the size of the first deflection section 83 in a width-direction of the motorcycle is such a size that covers the entirety of an inner portion of the fan case 20 in a width-direction of the motorcycle (i.e., an upper portion of the area E). Owing to this, a part of the exhaust air discharged upward and rearward from the exhaust air openings 21 of the fan case 20, the part being discharged upward, hits an inner surface of the first deflection section 83 and turns inward in a width-direction of the motorcycle.

As shown in FIG. 4, the substrate 80 includes a topportion 80b. The top portion 80b is located in a top part of the substrate 80 and extends substantially horizontally. In this embodiment, the top surface portion 98 is formed of the top portion 80b and the first deflection section 83. The top surface portion 98 covers a top portion of the radiator 18 while having a gap in the up/down direction at least from the radiator 18. The top surface portion 98 covers the top portion of the radiator 18 and a top portion of the radiator fan 19.

As shown in FIG. 4, the radiator cover 9 includes the side surface portion 97. The side surface portion 97 is located between the radiator 18 and the footrest section 35 in the left/right direction. The side surface portion 97 covers the outer surface of the radiator 18 in a width-direction of the motorcycle. In this embodiment, the side surface portion 97 is formed of a part of the substrate 80. The intake openings 9A and 9B are formed in the side surface portion 97. The intake openings 9A and 9B introduce air from right to left, namely, from outside to inside in a width-direction of the motorcycle.

The second deflection section 84 extends rearward from the footrest section 35 as seen in the side view of the vehicle. As shown in FIG. 2, the footrest section 35 is located generally at the border between the first deflection section 83 and the second deflection section 84 in the up/down direction, and outside of the first deflection section 83 and the second deflection section 84 in a width-direction of the motorcycle. The footrest section 35 is located outside of, to the outermost end of the radiator cover 9 in a width-direction of the motorcycle (see FIG. 4, etc.).

As shown in FIG. 4, the radiator cover 9 includes the rear surface portion 99 which extends downward from a rear end of the top surface portion 98 and covers at least a part of a rear portion of the radiator 18. In this embodiment, the second deflection section 84 covers at least a part of the rear portion of the radiator 18, and a part of the second deflection section 84 acts as the rear surface portion 99.

In the motorcycle 1, when the crank shaft 16 is rotated while the engine EG is driven, the radiator fan 19 is rotated along with the rotation of as the crank shaft 16. Owing to this, outside air which has been taken inside through the intake openings 9A and 9B of the radiator cover 9 passes the core portion 18A of the radiator 18 and then passes the ventilation opening 22 to enter the inside of the fan case 20. Then, the air which has entered the inside of the fan case 20 is released outside the fan case 20 as exhaust air from the exhaust air openings 21. In the motorcycle 1, the radiator cover 9 and the rear wheel 11 are entirely exposed as seen in the side view of the vehicle. Therefore, the exhaust air released outside the fan case 20 while the motorcycle 1 is running immediately flows rearward in the vehicle by the wind blowing against the vehicle. Accordingly, in the motorcycle 1 according to this embodiment, the influence of the exhaust air on the feet of the tandem rider is considered to be small.

The first deflection section 83 and the second deflection section 84 are formed using the radiator cover 9, and so the number of the elements of the motorcycle 1 is not increased. In addition, since the radiator cover 9 is formed of a resin, the deflection sections can be easily formed.

In this embodiment, the radiator cover 9 includes the side surface portion 97 for covering a in a width-direction of the motorcycle outer portion of the radiator 18 between the radiator 18 and the footrest section 35 in a width-direction of the motorcycle, and also includes the top surface portion 98 for covering the top portion of the radiator 18 while having a gap in the up/down direction at least from the radiator 18. Owing to this, air heated by the radiator 18 while the motorcycle 1 is running easily flows rearward along the top surface portion 98. When the motorcycle 1 is not running but is idling, the radiation from the radiator 18 toward the tandem rider is suppressed by the top surface portion 98. Therefore, any discomfort felt by the tandem rider can be alleviated.

The motorcycle 1 according to this embodiment includes the radiator fan 19 located between the engine unit U and the radiator 18 in the left/right direction. The side surface portion 97 of the radiator cover 9 has the intake openings 9A and 9B for introducing air from outside to inside in a width-direction of the motorcycle The top portion of the radiator cover 9 covers the top portion of the radiator 18 and the top portion of the radiator fan 19. As understood from this, in this embodiment, the top surface portion 98 of the radiator cover 9 covers a relatively large area. Therefore, the influence of the radiation from the radiator 18 on the tandem rider can be further suppressed, and so any discomfort felt by the tandem rider can be further alleviated.

As described above, the cap protection section 82 of the top surface portion 98 may cover at least the top portion of the radiator cap 81. In this case, the radiator cover 9 can block the heat from the radiator cap 81. Therefore, any discomfort felt by the tandem rider can be still further alleviated.

In this embodiment, the footrest section 35 of the tandem footrest 27 is located outside of the radiator 18, and rear, to the radiator 18 (see FIG. 1). Meanwhile, as shown in FIG. 4, the radiator cover 9 includes the rear surface portion 99 extending downward from the rear end of the top surface portion 98 and covering at least a part of the rear portion of the radiator 18. Owing to this, the radiator cover 9 can effectively suppress the rearward radiation from the radiator 18. Therefore, any discomfort felt by the tandem rider can be still further alleviated.

While the motorcycle 1 is at a stop but the engine EG is driven, the exhaust air is released from the exhaust air openings 21. However, since the motorcycle 1 is not running, there is no wind blowing against the vehicle. Therefore, when the motorcycle 1 is at a stop, air heated by the radiator 18 is likely to stay in the area E outside of , and in the vicinity of, the fan case 20. In the motorcycle 1 according to this embodiment, as described above, the bottom edge 7b of the side cover 7A extends obliquely rearward and upward, and the radiator cover 9 and the rear wheel 11 are entirely exposed as seen in the side view of the vehicle. Therefore, the exhaust air is likely to flow outward in a width-direction of the motorcycle from the area E. As a result, in the case where, as in this embodiment, the footrest section 35 is located below the bottom edge 7b of the side cover 7A as seen in the side view of the vehicle, namely, at a position relatively close to the fan case 20, the exhaust air may negatively affect the feet of the tandem rider.

However, in this embodiment, a part of the exhaust air discharged from the exhaust air openings 21, the part being discharged upward, hits at least the inner surface of the first deflection section 83 and is turned inward in a width-direction of the motorcycle. A part of the exhaust air discharged from the exhaust air openings 21, the part being discharged rearward, flows along an inner surface of the second deflection section 84. Therefore, the exhaust air discharged from the exhaust air openings 21 is suppressed by the first deflection section 83 and the second deflection section 84 from flowing outside the radiator cover 9 (i.e. , toward the footrest section 35). Accordingly, any discomfort felt by the tandem rider by the influence of the exhaust air can be alleviated with certainty.

In the motorcycle 1 according to this embodiment, the tandem footrest 27 is located outside of the radiator cover 9 in a width-direction of the motorcycle, and is located rearward to the radiator 18 in the front/rear direction (see FIG. 1 and FIG. 4). The tandem footrest 27, which is located rearward to the radiator 18, does not overlap the radiator 18 as seen in the side view. As shown in FIG. 1, the intake openings 9A and 9B of the radiator cover 9 do not overlap the footrest section 35 as seen in the side view. Therefore, the air flowing from the outside of the radiator cover 9 toward the radiator fan 19 (see FIG. 2) is not blocked by the footrest 35. Namely, the air smoothly flows from the outside of the radiator 18 toward the radiator 18. Owing to this, the cooling performance of the radiator 18 is not negatively affected. An undesired rise of the temperature of the radiator 18 is prevented.

The motorcycle 1 in this embodiment has a water-cooled type engine and includes the radiator 18 and the radiator fan 19 side by side in the left/right direction. Therefore, as compared to a motorcycle having an air-cooled type engine, the distance between the radiator 18 and the footrest 35 in the left/right direction is shorter. This makes the leg of the tandem rider close to the radiator 18. This generates an undesirable possibility that the heat from the fan case 20 may influence the tandem rider. The influence of the heat from the fan case 20 can be reduced by moving the footrest section 35 in the left/right direction or the front/rear direction to distance the footrest section 35 and the radiator 18 from each other. The position of the footrest section 35 needs to be determined based on the structure of the motorcycle 1 and a demand from the tandem rider. If a particular area (i.e., the vicinity of the area E) is excluded from the area where the footrest 35 can be located for the purpose of avoiding the influence of the exhaust air or the like from the fan case 20 on the tandem rider, the footrest section 35 is required to be located away from that particular area. This may spoil the riding comfort of the tandem rider. By contrast, in this embodiment, the degree of freedom for the position of the footrest section 35 is increased. Therefore, the discomfort which may be felt by the tandem rider can be suppressed without decreasing the riding comfort of the tandem rider. Thus, the motorcycle is comfortable to the tandem rider.

In addition, the tandem footrest 27 in this embodiment includes the leg section 32. By appropriately selecting the length and extending direction of the leg section 32, the footrest section 35 can be located at a more suitable position for the tandem rider. According to this embodiment, by forming the leg section 32 with an appropriate structure, the tandem footrest 27 more comfortable to the tandem rider can be realized.

### <Embodiment 2>

Now, embodiment 2 of the present invention will be described. In this embodiment, identical elements to those of the previous embodiment bear identical reference numerals thereto, and the descriptions thereof will be omitted. In this embodiment, one end of a flap 92 is fixed to a front end portion of a rear fender 91 covering the rear wheel 11 (see FIG. 5).

The flap 92 is formed of, for example, a flexible material (for example, rubber). The flap 92 has a function of preventing a cell motor 41 or the like located on a top surface of the engine EG (crank case 12) from being contaminated with muddy water or the like splashed by the rotation of the rear wheel 11. In this embodiment, the flap 92 has a deflection section 92A, which is integrally formed with the flap 92. The deflection section 92A extends substantially horizontally from the flap 92 and projects outward in a width-direction of the motorcycle. An outer end of the deflection section 92A (right end in FIG. 5) in a width-direction of the motorcycle is in close contact with an inner surface of a part of the leg section 32 and an inner surface of the entirety of the base section 39 of the tandem footrest 27. The outer end of the deflection section 92A is fixed to the tandem footrest 27 by a screw not shown. Specifically, a portion of the deflection section 92A which crosses the motorcycle 1 in the left/right direction, along a position rearward to the fan case 20, is located above the fan case 20.

As shown in FIG. 5, the substrate 80 includes the top portion 80b. The top portion 80b is located in a top part of the substrate 80 and extends substantially horizontally. As shown in FIG. 5, a part of a right portion of the flap 92 covers the top portion of the radiator 18 and a top portion of the fan case 20. As described above, the radiator fan 19 is accommodated inside the fan case 20. Therefore, the part of the right portion of the flap 92 is considered to cover the top portion of the radiator 18 and the top portion of the radiator fan 19. In this embodiment, the top surface portion 98 is formed of the top portion 80b and the flap 92. The top surface portion 98 covers the top portion of the radiator 18 while having a gap in the up/down direction at least from the radiator 18. The top surface portion 98 covers the top portion of the radiator 18 and the top portion of the radiator fan 19.

In this embodiment also, the radiator cover 9 includes the rear surface portion 99 extending downward from the rear end of the top surface portion 98 and covering at least a part of the rear portion of the radiator 18. In this embodiment, a rear surface of the substrate 80 covers at least a part of a rear portion of the radiator 18, and a part of the substrate 80 acts as the rear surface portion 99.

As shown in FIG. 5, the footrest section 35 is located outside of the radiator 18 in a width-direction of the motorcycle. The footrest section 35 is located rearward to the radiator 18. Namely, in the motorcycle 1 according to this embodiment, the footrest section 35 is located outside of the radiator in a width-direction of the motorcycle, and rear, to the radiator 18. Alternatively, the footrest section 35 may be located outside of the radiator 18 and overlap the radiator 18 as seen in the side view. Still alternatively, the footrest section 35 may be located above the radiator 18 as seen in the side view.

Regarding a portion the deflection section 92A which is located rearward to the fan case 20 and overlaps the fan case 20 in the left/right direction, a bottom surface of the portion is hit by exhaust air discharged from the exhaust air openings 21 and flown upward. The bottom surface inclines rearward and upward. The exhaust air discharged rearward from the fan case 20 hits the bottom surface of the deflection section 92A of the flap 92 and is turned rearward and upward along the inclination of the bottom surface. Owing to this, the influence of the exhaust air on the tandem rider can be suppressed. An end of the flap 92 (the right end of the deflection section 92A) is in close contact with the inner surface of a part of the leg section 32 and the inner surface of the entirety of the base section 39 of the tandem footrest 27. Therefore, a part of the exhaust air discharged from the exhaust air openings 21, the part being outward in a width-direction of the motorcycle, is unlikely to hit the footrest section 35. In other words, a part of the exhaust air discharged from the exhaust air openings 21, the part being flowing outward in a width-direction of the motorcycle, is prevented from hitting the feet of the tandem rider with certainty.

### <Embodiment 3>

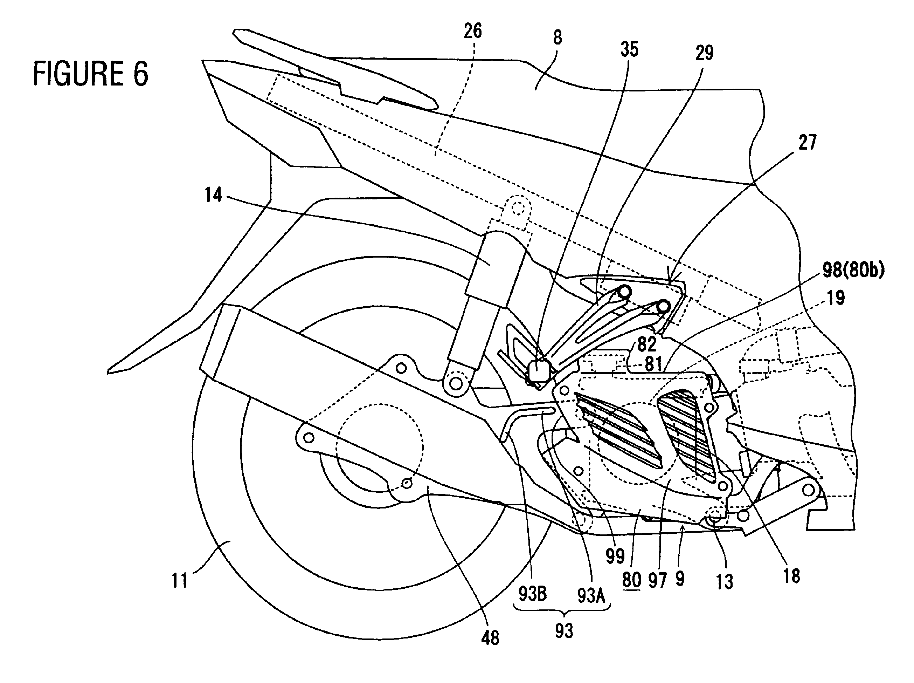

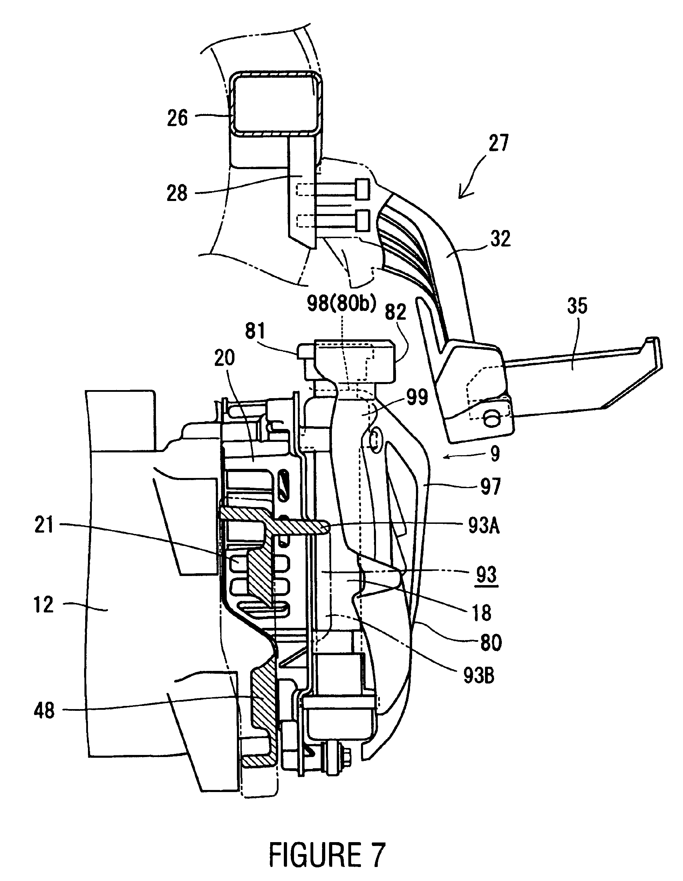

Now, embodiment 3 of the present invention will be described. In this embodiment, identical elements to those of the previous embodiments bear identical reference numerals thereto, and the descriptions thereof will be omitted. In this embodiment, a deflection section is provided outside of the rear arm 48 in a width-direction of the motorcycle (see FIG. 6 and FIG. 7).

As shown in FIG. 6, a front portion of the rear arm 48 is branched into two, i.e., a top portion and a bottom portion. The front portion of the rear arm 48 is coupled to a right portion of a rear portion of the crank case 12. Meanwhile, a rear portion of the rear arm 48 supports the rear wheel 11. A deflection section 93 is located such that a front end thereof is below and forward to the footrest section 35 as seen in the side view of the vehicle. The deflection section 93 includes a front top portion 93Aextending rearward straight from the front end and a rear portion 93B extending obliquely downward from a rear end of the front top portion 93A. As shown in FIG. 6, a portion of the deflection section 93 which is rearward to a center in the front/rear direction is bent obliquely downward. As shown in FIG. 7, the deflection section 93 projects outward in a width-direction of the motorcycle from an outer surface of the rear arm 48. The portion of the deflection section 93 projecting outward in a width-direction of the motorcycle has substantially the same width throughout the length of the deflection section 93. The deflection section 93 is located rearward to the fan case 20. As shown in FIG. 7, the deflection section 93 projects rightward to the fan case 20 in the left/right direction so as to partially overlap a left portion of the radiator 18 located to the right of the fan case 20. In the up/down direction, the front top portion 93A of the deflection section 93 is located at substantially the same position as a center portion of the fan case 20.

As shown in FIG. 7, the substrate 80 includes the top portion 80b. The top portion 80b is located in the top part of the substrate 80 and extends substantially horizontally. The top portion 80b covers the top portion of the radiator 18. In this embodiment, the top surface portion 98 is formed of the top portion 80b. The top surface portion 98 covers the top portion of the radiator 18 while having a gap in the up/down direction at least from the radiator 18.

The radiator cover 9 includes the rear surface portion 99 extending downward from the rear end of the top surface portion 98 and covering at least a part of the rear portion of the radiator 18. As shown in FIG. 7, the rear surface of the substrate 80 covers at least a part of the rear portion of the radiator 18, and a part of the substrate 80 acts as the rear surface portion 99.

As shown in FIG. 7, the footrest section 35 is located outside of the radiator 18in a width-direction of the motorcycle. As shown in FIG. 6, the footrest section 35 is located rearward to the radiator 18. Namely, in the motorcycle 1 according to this embodiment, the footrest section 35 is located outside of the radiator 18 in a width-direction of the motorcycle, and rear, to the radiator 18.

As described above, in this embodiment, a part of exhaust air discharged rearward from the exhaust air openings 21 of the fan case 20 flows along the front top portion 93A, and then has the flow direction thereof corrected by the rear portion 93B to flow downward. Namely, the part of the exhaust air has the flow direction thereof changed to flow away from the footrest section 35. Therefore, the exhaust air is unlikely to hit the footrest section 35. Owing to this, the discomfort felt by the tandem rider due to the influence of the exhaust air can be alleviated with certainty.

The deflection section 93 is integrally formed with the rear arm 48. Alternatively, the deflection section 93 may be separate from the rear arm 48 and fixed to the rear arm 48.

### <Embodiment 4>

Now, embodiment 4 of the present invention will be described. In the following description, identical elements to those of the previous embodiments bear identical reference numerals thereto.

As shown in FIG. 8, the side cover 7A is located to cover an outer portion of a part of the seat frame 26. The side cover 7A is located below the seat 8 (see FIG. 1). Although not shown in FIG. 8, the seat 8 is provided above the side cover 7A. The side cover 7A has the bottom edge 7b extending rearward and upward obliquely. The bottom edge 7b is distanced from the rear wheel 11 in the up/down direction as seen in the side view.

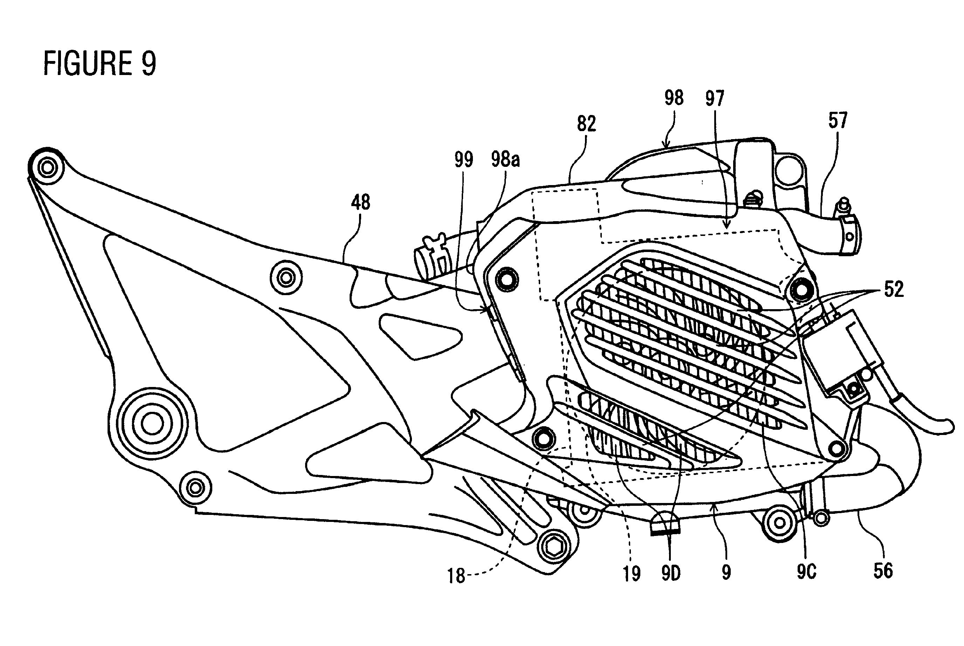

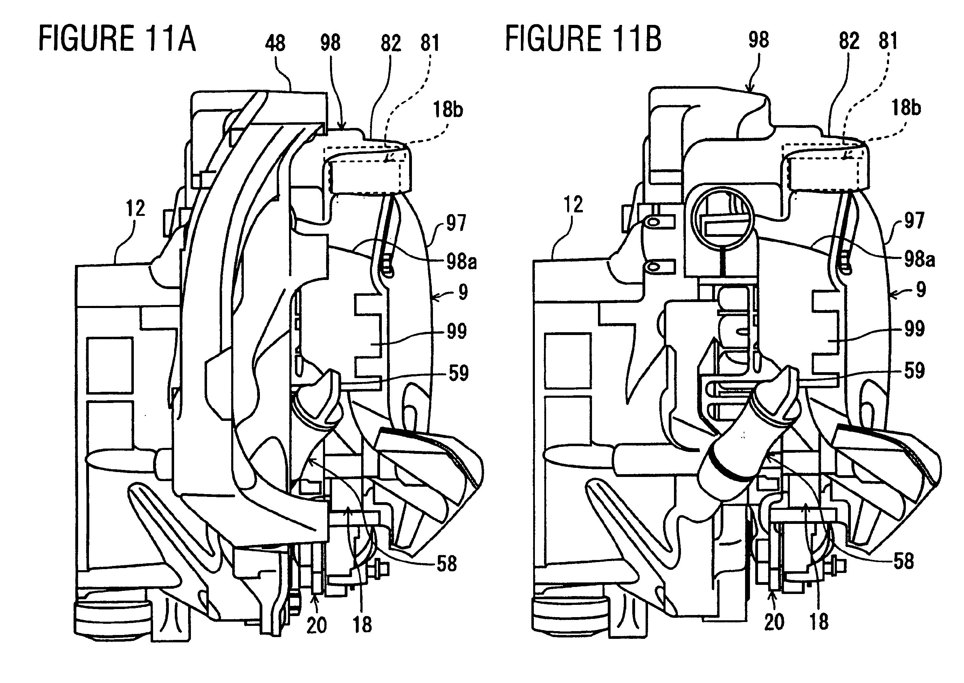

As shown in FIG. 11A or FIG. 11B, the radiator 18 is located outside of the crank case 12in a width-direction of the motorcycle. In other words, the radiator 18 is located outside of the engine unit U in a width-direction of the motorcycle. The radiator 18 is covered with the radiator cover 9. Therefore, the radiator cover 18 overlaps the radiator cover 9 as seen in the side view (see FIG. 9). As shown in FIG. 8, the radiator cover 9 is located below the bottom edge 7b of the side cover 7A. Namely, the radiator 18 is at least partially located below the bottom edge 7b of the side cover 7A.

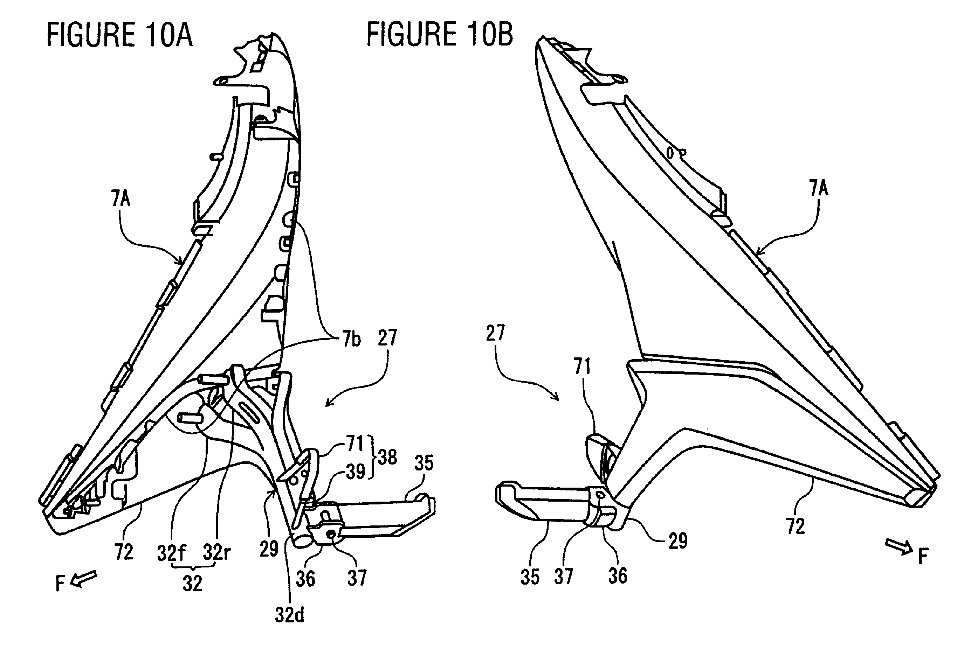

As shown in FIG. 8, the motorcycle 1 includes the tandem footrest 27. The tandem footrest 27 includes the leg section 32 (see FIG. 10A) and the footrest section 35 supported by the leg section 32. The footrest section 35 is located outside of the radiator in a width-direction of the motorcycle as in each of the above embodiments. Alternatively,thefootrest section 35 may be located outside of the radiator 18 in a width-direction of the motorcycle and rearward to the radiator 18 in the front/rear direction. As shown in FIG. 8, the footrest 35 in this embodiment overlaps a top rear portion of the radiator cover 9 as seen in the side view. In FIG. 10A and FIG. 10B, arrow F represents the forward direction of the motorcycle 1.

The motorcycle 1 further includes a shielding member 71. The shielding member 71 is formed of a material having a lower thermal conductivity than the leg section 32. The shielding member 71 is formed of a non-metal material, specifically, a resin material. At least a part of the shielding member 71 is located rearward to the footrest section 35 as seen in the side view. The shielding member 71 may be attached to the base section 39 as described later, or may be attached to the main body 29, the footrest section 35 or the holding sections 36.

As shown in FIG. 10A, the tandem footrest 27 includes the base section 39 extending obliquely rearward and upward from the footrest section 35 as seen in the side view. The base section 39 is fixed to a bottom portion of the leg section 32. The shielding member 71 is shaped like a cap and is fit onto the base section 39. Thus, the shielding member 71 is easy to be attached. The base section 39 and the shielding member 71 form a projection section 38. The projection section 38 extends obliquely rearward and upward from the footrest section 35 as seen in the side view.

As shown in FIG. 10A, the motorcycle 1 in this embodiment includes a cover 72. The cover 72 is separate from the shielding member 71. Like the shielding member 71, the cover 72 is formed of a material having a lower thermal conductivity than the leg section 32. The cover 72 is formed of a non-metal material, specifically, a resin material. The cover 72 is located above the footrest section 35. The cover 72 is exposed outside the tandem footrest 27 in a width-direction of the motorcycle.

As shown in FIG. 10A, the cover 72 is attached to the side cover 7A. As shown in FIG. 10B and the like, at least a top portion of the leg section 32 is covered with the cover 72 from outside in a width-direction of the motorcycle. The cover 72 is not limited to being attached to the side cover 7A, and may be attached to the rear fender 91 (see FIG. 8) which covers a top portion of the rear wheel 11. The cover 72 maybe integral with the rear fender 91. In this embodiment, the cover 72 covers, from outside in a width-direction of the motorcycle, a portion of the leg section 32 which is above the position at which the holding sections 36 are attached. Owing to this, regarding the leg section 32 formed of a metal material, at least a portion above the position at which the holding sections 36 are attached is not exposed outside the vehicle. As a result, the comfort felt by the tandem rider can be further improved.

Although not shown, the cover 72 and the shielding member 71 may be provided also on the left side of the motorcycle 1. The motorcycle 1 may include the cover 72 and the shielding member 71 only on the side, in the left/right direction, on which the radiator 18 is located. The motorcycle 1 is not limited to including both the cover 72 and the shielding member 71, and may include only the cover 72 or only the shielding member 71. The motorcycle 1 may include neither the cover 72 nor the shielding member 71.

As shown in FIG. 9 and FIG. 11, the radiator cover 9 in this embodiment includes the side surface portion 97, the top surface portion 98, and the rear surface portion 99. The side surface portion 97 covers the in a width-direction of the motorcycle outer portion of the radiator 18 between the radiator 18 and the footrest section 35 in a width-direction of the motorcycle. The top portion 98 covers the top portion of the radiator 18 while having a gap in the up/down direction from at least the radiator 18. The rear surface portion 99 extends downward from the rear end 98a of the top portion 98 and covers at least a part of the rear portion of the radiator 18. The side surface portion 97, the top surface portion 98 and the rear surface portion 99 may be separate or integral.

As shown in FIG. 11A and FIG. 11B, the fan case 20 is located to the side of the radiator 18. The fan case 20 is located inward to the radiator 18 in a width-direction of the motorcycle. Inside the fan case 20, the radiator fan 19 (see FIG. 9) is provided. Namely, the radiator fan 19 is located between the engine unit U (see FIG. 1) and the radiator 18 in the left/right direction. The radiator fan 19 introduces air to the radiator 18 from outside to inside in a width-direction of the motorcycle.

As shown in FIG. 9, the side surface portion 97 of the radiator cover 9 has an opening 9C and an opening 9D for introducing air from outside to inside in a width-direction of the motorcycle. The opening 9D is located in a bottom portion of the side surface portion 97. The opening 9C is located above the opening 9D in the side surface portion 97. A plurality of air guide plates 52 are provided both in the opening 9C and the opening 9D and extend rearward and upward obliquely. Each air guide plate 52 can guide the wind, blowing against the vehicle while the motorcycle 1 is running, inward with respect to the radiator cover 9 and allow the wind to pass the core portion 18A (see FIG. 3) of the radiator 18.

As shown in FIG. 11B, the top surface portion 98 of the radiator cover 9 covers the top portion of the radiator 18 and the top portion of the fan case 20. Namely, the top surface portion 98 of the radiator cover 9 covers the top portion of the radiator 18 and the top portion of the radiator fan 19. As understood from this, the top surface portion 98 of the radiator cover 9 in this embodiment covers a relatively large area, not only the top portion of the radiator 18. Meanwhile, the radiator 18 has a top surface portion facing upward, and a water intake opening 18b is formed in the top surface portion. Namely, the water intake opening 18b is located in the top surface of the radiator 18. The radiator 18 includes the radiator cap 81 for closing the water intake opening 18b so as to be openable. The top surface portion 98 of the radiator cover 9 includes a cap protection section 82 for covering at least the top portion of the radiator cap 81. Owing to the cap protection section 82, the top surface portion 98 can block the heat from the radiator cap 81.

As described above, the rear surface portion 99 of the radiator cover 9 extends downward from the rear end 98a of the top surface portion 98 and covers at least a part of the rear portion of the radiator 18. Owing to this, the radiator cover 9 can suppress the rearward radiation from the radiator 18. As shown in FIG. 11B, the rear surface portion 99 has a smaller width in the left/right direction in a bottom portion thereof than in a top portion thereof. Namely, the bottom portion of the rear surface portion 99 is formed to be compact. Air flowing between the radiator 18 and the radiator cover 9 while the motorcycle 1 is running moves smoothly from the top portion to the bottom portion of the rear surface portion 99.

As shown in FIG. 11A and FIG. 11B, an oil intake opening 58 is formed in a part of the rear portion of the crank case 12. At a tip of the oil intake opening 58, an oil cap is detachably attached. The oil cap 59 closes the oil intake opening 58 so as to be openable. The oil cap 59 is located rearward to the radiator 18 and below a bottom end of the rear surface portion 99 of the radiator cover 9. In FIG. 11A and FIG. 11B, a top end of the oil cap 59 is located above the bottom end of the rear surface portion 99. This is because of the shape of the oil cap 59. Since the rear surface portion 99 has a smaller width in the left/right direction in the bottom portion thereof than in the top portion thereof and further the oil cap 59 is located rearward to the radiator 18 and below the bottom end of the rear surface portion 99 of the radiator cover 9, the oil cap 59 is easily detached or attached.

As described above, the radiator 18 is located outside of the engine unit U in a width-direction of the motorcycle. The radiator 18, which is in the form of the so-called side radiator, swings together with the engine unit U. Therefore, there is no need to consider the difference in the amount of swing between the radiator 18 and the engine unit U. Since this makes it unnecessary to absorb the swing by a radiator hose 56, a radiator hose 57 or the like, the radiator hose 56 and the radiator hose 57 can be located relatively freely (see FIG. 9).

### <Other embodiments>

The present invention is not limited to the embodiments described above with reference to the drawings, and encompasses, for example, the following embodiments. The present invention may be carried out in various other modifications without departing from the gist of the present invention.
(1) The deflection section 92A may be provided on the seat frame 26 instead of the tandem footrest 27.
(2) The deflection section may be a combination of any of a plurality of deflection sections in any of the above embodiments.
(3) In each of the above embodiments, the engine unit U includes the rear arm 48 in a right portion of the vehicle (the front portion of the rear arm 48 is coupled to a right rear end portion of the crank case 12, and the rear portion of the rear arm 48 supports the rear wheel 11). The motorcycle 1 does not need to include the rear arm 48. In this case, the rear wheel 11 is supported by, for example, only a rear portion of the engine unit U.
(4) In each of the above embodiments, a pair of left and right rear shock absorbers 14 are provided on both sides of the vehicle. Only one rear shock absorber 14 may be provided on one side of the vehicle. In this case, the rear shock absorber 14 may be located in the vicinity of the pivot shaft 13.
(5) In each of the above embodiments, the tandem footrest is supported as being suspended obliquely rearward and downward from the seat frame. Alternatively, the tandem footrest may extend substantially horizontally in the front/rear direction of the vehicle from the base section toward the footrest section 35.
(6) In each of the above embodiments, the leg section 32 includes the front leg section 32f and the rear leg section 32r branched from each other. The front leg section 32f and the rear leg section 32r become gradually closer to each other as approaching the bottom end of the leg section 32, and are connected to the bottom leg section 32d. Alternatively, the leg section 32 may be formed of one element without including the branched sections. Even where the leg section 32 includes the front leg section 32f and the rear leg section 32r branched from each other, the front leg section 32f and the rear leg section 32r may be kept branched from a top end to a bottom end thereof without being connected to the bottom leg section 32d.
(7) In each of the above embodiments, the footrest section 35 is rod-shaped as shown in FIG. 10 and the like. The footrest section 35 is not limited to being rod-shaped, and may have any shape as long as being pivotable between the use position and the storage position and capable of supporting the leg of the tandem rider.
(8) At least in Embodiment 1, 3 and 4, the radiator cover 9 includes the side surface portion 97, the top surface portion 98 and the rear surface portion 99. The radiator cover 99 does not need to include the rear surface portion 99.

### DESCRIPTION OF THE REFERENCE NUMERALS

- 6: Body frame
- 7: Body cover
- 7A: Side cover (body cover)
- 7b: Bottom edge
- 8: Seat
- 9: Radiator cover
- 9A: Intake opening (opening)
- 9B: Intake opening (opening)
- 9C: Opening
- 9D: Opening
- 11: Rear wheel
- 12: Crank case
- 18: Radiator
- 18b: Water intake opening
- 19: Radiator fan
- 26: Seat frame (body frame)
- 27: Tandem footrest
- 32: Leg section
- 35: Footrest section
- 58: Oil intake opening
- 59: Oil cap
- 81: Radiator cap
- 82: Cap protection section
- 97: Side surface portion
- 98: Top surface portion
- 99: Rear surface portion
- U: Engine unit

## Claims

1. A motorcycle, comprising:
a body frame;
a seat supported by the body frame;
an engine unit including an engine, the engine unit being located below the seat and swingably supported by the body frame;
a rear wheel located rearward to the engine;
a body cover having a bottom edge which extends rearward and upward obliquely as seen in a side view and is spaced-apart in the upward direction from the rear wheel as seen in the side view, the body cover being located below the seat so as to cover an outer portion of a part of the body frame;
a radiator located outside of the engine unit in a width-direction of the motorcycle and having at least a part thereof located below the bottom edge of the body cover;
a tandem footrest including a leg section fixed to the body frame and a footrest section supported by the leg section and located outside of the radiator in a width-direction of the motorcycle and below the bottom edge of the body cover as seen in the side view, the footrest section supporting a leg of a tandem rider; and
a radiator cover including a side surface portion for covering an outer portion of the radiator between the radiator and the footrest section in a width-direction of the motorcycle, and a top surface portion for covering a top portion of the radiator while having a gap in an up/down direction from at least the radiator.

2. A motorcycle according to claim 1, further comprising a radiator fan located between the engine unit and the radiator in a width-direction of the motorcycle; wherein:
the side surface portion of the radiator cover has an opening for introducing air from outside to inside in a width-direction of the motorcycle; and
the top surface portion of the radiator cover covers the top portion of the radiator and a top portion of the radiator fan.

3. A motorcycle according to claim 1, wherein:
the radiator includes a top portion having a water intake opening and a radiator cap for closing the water intake opening so as to be openable; and
the top surface portion of the radiator cover includes a cap protection section for covering at least a top portion of the radiator cap.

4. A motorcycle according to claim 1, wherein:
the footrest section of the tandem footrest is located outside of the radiator in a width-direction of the motorcycle, and rearward, to the radiator; and
the radiator cover further includes a rear surface portion extending rearward from a rear end of the top surface portion and covering at least a part of a rear portion of the radiator.

5. A motorcycle according to claim 4, wherein the rear surface portion has a smaller width in a width-direction of the motorcycle at a bottom portion thereof than at a top portion thereof.

6. A motorcycle according to claim 5, wherein:
the engine unit includes a crank case having an oil intake opening and an oil cap for closing the oil intake opening so as to be openable; and
the oil cap is located rearward to the radiator and below a bottom end of the rear surface portion of the radiator cover.
